# EUROPEAN PATENT APPLICATION

(11) **EP 4 373 203 A1**
(43) Date of publication of application: **22.05.2024**
(21) Application number: 21949732.8
(22) Date of filing: 16.07.2021
(51) Int. Cl.: H04W 76/11, H04W 72/04

(54) **COMMUNICATION METHOD AND APPARATUS, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2021/106882
(87) International publication number: WO 2023/283949

(57) **Abstract**

Embodiments of the present disclosure relate to the technical field of mobile communications, and provide a communication method and apparatus, an electronic device and a storage medium. The communication method is applied to a station device that supports multiple connections, and the method comprises: sending a first radio frame, wherein the first radio frame comprises a TID-to-Link mapping information element between a communication identifier and a target communication connection, and the target communication connection is a newly added and/or deleted communication connection. The embodiments of the present disclosure provide a means for implementing a TID-to-Link mapping mechanism in a multi-connection scenario.

## Description

### TECHNICAL FIELD

The disclosure relates to a field of mobile communication technologies, in particular to a communication method, a communication device, an electronic device and a storage medium.

### BACKGROUND

With the rapid development of mobile communication technologies, Wireless Fidelity (Wi-Fi) technology has made great progress in terms of transmission rate and throughput. Currently, Wi-Fi technology studies 320MHz bandwidth transmission, aggregation and collaboration of multiple frequency bands, and the like. The main application scenarios for this Wi-Fi technology include video transmission, Augmented Reality (AR), and Virtual Reality (VR).

In detail, the aggregation and collaboration of multiple frequency bands refers to simultaneous communication among devices in 2.4GHz, 5.8GHz, 6GHz and other frequency bands. For the scenario where devices communicate with each other in multiple frequency bands at the same time, a new Media Access Control (MAC) mechanism may be defined for management. In addition, the aggregation and collaboration of multiple frequency bands is expected to be able to support low-latency transmission.

Currently, the aggregation and collaboration of multiple frequency bands may support a maximum bandwidth of 320MHz (160MHz+160MHz), and it may also support 240MHz (160MHz+80MHz) and other bandwidths supported by the existing standards.

In the currently studied Wi-Fi technology, multi-link communication may be supported. For example, in a wireless Local Area Network (LAN), a Basic Service Set (BSS) may consist of an Access Point (AP) and one or more Stations (STAs) in communication with the AP. The AP and the STAs can be Multi-Link Devices (MLDs). The MLD supports a function of sending and/or receiving simultaneously on multiple links at the same time. Therefore, there are multiple links between the AP MLD and the STA MLD for communication.

In a multi-link scenario, the AP MLD may delete/add its secondary APs. If the secondary APs are changed, a Traffic Identifier-to-communication Link (TID-to-Link) mapping mechanism may be unable to realize. Thus, a way for realizing the TID-to-Link mapping mechanism in the multi-link scenario.

### SUMMARY

The embodiments of the disclosure provide a communication method, a communication device, an electronic device and a storage medium, to provide a way to realize a TID-to-Link mapping mechanism in the multi-link scenario.

In an aspect, embodiments of the disclosure provide a communication method, which is performed by a STA that supports multiple links. The method includes:
sending a first radio frame, in which the first radio frame includes a Traffic Identifier-to-communication Link (TID-to-Link) mapping information element between a traffic identifier and a target communication link, and the target communication link includes a newly added and/or deleted communication link.

In an aspect, embodiments of the disclosure provide a communication method, which is performed by an AP that supports multiple links. The method includes:
receiving a first radio frame, in which the first radio frame includes a Traffic Identifier-to-communication Link (TID-to-Link) mapping information element between a traffic identifier and a target communication link, and the target communication link includes a newly added and/or deleted communication link.

In another aspect, embodiments of the disclosure provide a STA. The STA is a device that supports multiple links. The STA includes:
a sending module, configured to send a first radio frame, in which the first radio frame includes a Traffic Identifier-to-communication Link (TID-to-Link) mapping information element between a traffic identifier and a target communication link, and the target communication link includes a newly added and/or deleted communication link.

In another aspect, embodiments of the disclosure provide an AP. The AP is a device that supports multiple links. The AP includes:
a receiving module, configured to receive a first radio frame, in which the first radio frame includes a Traffic Identifier-to-communication Link (TID-to-Link) mapping information element between a traffic identifier and a target communication link, and the target communication link includes a newly added and/or deleted communication link.

In another aspect, embodiments of the disclosure provide a communication device, which is applied to a STA that supports multiple links. The device includes:
a radio frame sending module, configured to send a first radio frame, in which the first radio frame includes a Traffic Identifier-to-communication Link (TID-to-Link) mapping information element between a traffic identifier and a target communication link, and the target communication link includes a newly added and/or deleted communication link.

In another aspect, embodiments of the disclosure provide a communication device, which is applied to an AP that supports multiple links. The device includes:
a radio frame receiving module, configured to receive a first radio frame, in which the first radio frame includes a Traffic Identifier-to-communication Link (TID-to-Link) mapping information element between a traffic identifier and a target communication link, and the target communication link includes a newly added and/or deleted communication link.

The embodiments of the disclosure also provide an electronic device, which includes a memory, a processor and computer programs stored on the memory and executable by the processor. When the programs are executed by the processor, one or more methods of the embodiments of the disclosure are implemented.

The embodiments of the disclosure also provide a computer-readable storage medium having computer programs stored thereon. When the computer programs are executed by a processor, one or more methods of the embodiments of the disclosure are implemented.

In the embodiments of the disclosure, the STA sends the first radio frame. The first radio frame includes the TID-to-Link mapping information element, and the target communication link includes a newly added and/or deleted communication link. For the newly added and/or deleted communication link, the STA requests the AP to perform a corresponding TID-to-Link mapping operation via the first radio frame, to realize the TID-to-Link mapping mechanism, thereby improving the spectrum utilization.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

In order to clearly illustrate technical solutions of embodiments of the disclosure, a brief description of drawings used in embodiments is given below. Obviously, the drawings in the following descriptions are only part of the embodiments of the disclosure, and for those skilled in the art, other drawings can be obtained according to these drawings without inventive work.
FIG. 1 is a first flowchart of a communication method according to an embodiment of the disclosure.
FIG. 2 is a schematic diagram of a first example according to an embodiment of the disclosure.
FIG. 3 is a second flowchart of a communication method according to an embodiment of the disclosure.
FIG. 4 is a third flowchart of a communication method according to an embodiment of the disclosure.
FIG. 5 is a fourth flowchart of a communication method according to an embodiment of the disclosure.
FIG. 6 is a block diagram of a station (STA) according to an embodiment of the disclosure.
FIG. 7 is a block diagram of an access point (AP) according to an embodiment of the disclosure.
FIG. 8 is a schematic diagram of an electronic device according to an embodiment of the disclosure.

### DETAILED DESCRIPTION

In the embodiments of the disclosure, the term "and/or" describes a relation of associated objects, which indicates three relations, for example, "A and/or B" indicates that A exists alone, A and B both exist, and B exists alone. The character "/" generally indicates that the associated objects prior to and after the character "/" is in an "or" relation.

The term "multiple" in the embodiments of the disclosure refers to two or more, which is the similar for other quantifiers.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The technical solutions in the embodiments of the disclosure will be described clearly and completely below in combination with the accompanying drawings in the embodiments of the disclosure. Clearly, the described embodiments are only a part of the embodiments of the disclosure, and not all of the embodiments. Based on the embodiments of the disclosure, other embodiments obtained by those skilled in the art without inventive works all fall within the scope of protection of the disclosure.

The embodiments of the disclosure provide a communication method, a communication device, a terminal and a network device, to provide a way to realize a TID-to-Link mapping mechanism in a multi-link scenario.

The method and device are based on the same application conception, and since the method and device solve problems based on similar principles, the implementations of the device and the method can be referred to each other, and the repeated contents is not elaborated.

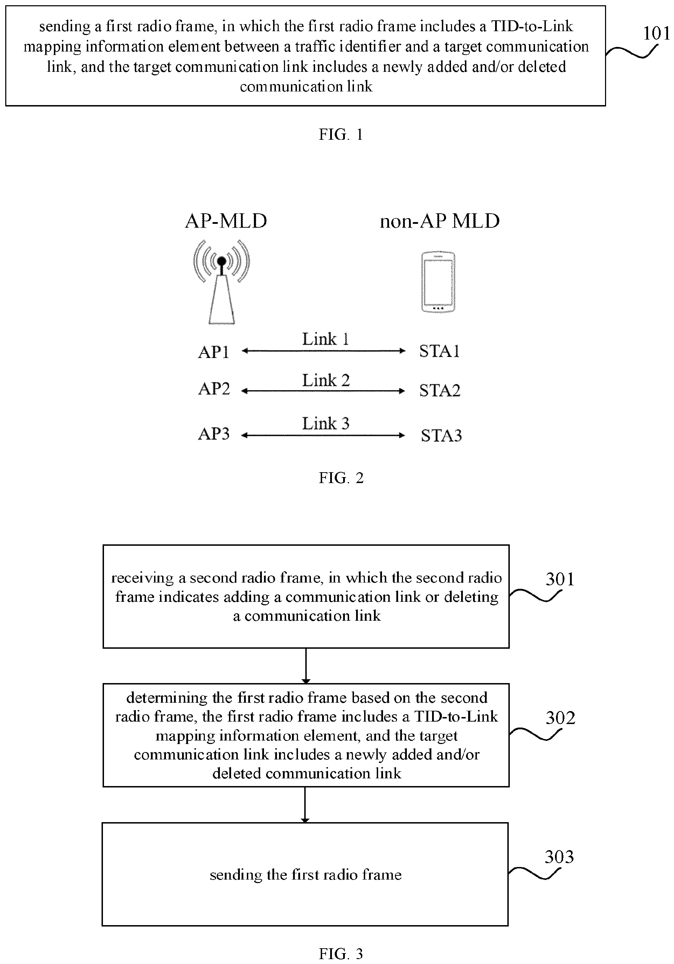

In FIG. 1, the embodiment of the disclosure provides a communication method. Optionally, the method is performed by a STA (i.e., a non-AP MLD) that supports multiple links. The method includes the following steps.

At step 101, a first radio frame is sent, in which the first radio frame includes a Traffic Identifier-to-communication Link (TID-to-Link) mapping information element between a traffic identifier and a target communication link, and the target communication link includes a newly added and/or deleted communication link.

In the embodiment of the disclosure, an AP MLD and the Non-AP MLD may be devices that support multiple links. For ease of description, the following contents mainly describe an example of multi-link communication between one AP and one non-AP MLD (STA), but the exemplary embodiments of the disclosure are not limited thereto.

As a first example, in FIG. 2, the AP MLD may represent an AP that supports a multi-link communication function, and the non-AP MLD may represent a STA that supports a multi-link communication function. As illustrated in FIG. 2, the AP MLD may operate under three links. AP 1, AP2, and AP3 shown in FIG. 2 each may operate under Link 1, Link 2, and Link 3, respectively. The non-AP MLD, i.e., STA1, STA2, and STA3 shown in FIG. 2, may also operate under three links, in which STA1 works under Link 1, STA2 works under Link 2, and STA3 works under Link 3. In the example of FIG. 2, for example, AP1 communicates with STA1 through Link 1, and similarly, AP2 communicates with STA2 through Link 2, and AP communicates with STA3 through Link 3. In addition, Link 1 to Link 3 may be links at different frequencies, e.g., links at 2.4GHz, 5GHz, and 6GHz, or links having the same or different bandwidths at 2.4GHz. In addition, each link may have a plurality of channels. It may be appreciated that the communication scenario shown in FIG. 2 is only exemplary, and the concept of the disclosure is not limited thereto. For example, the AP MLD may be connected to multiple non-AP MLDs, or the AP may communicate with other types of STAs under each link.

In a multi-link scenario, the AP MLD may delete/add its secondary AP. If a secondary AP is changed, for example, deleting a link where the secondary AP operates, the STA sends the first radio frame, the first radio frame is configured to request to update a TID-to-Link mapping. For example, for case one where the AP MLD deletes the link on which its secondary AP operates, the TID may still be mapped to the deleted link of the secondary AP, at this time, the STA may request the AP MLD to update the TID-to-Link mapping. For case two where the AP MLD adds a new secondary AP, a link of the newly added secondary AP does not have a TID mapping. In the above two cases, the STA requests the AP MLD to update the TID-to-Link mapping via the first radio frame, to realize the TID-to-Link mapping mechanism.

The target communication link includes a newly added and/or deleted communication link. The first radio frame includes the TID-to-Link mapping information element. The TID-to-Link mapping information element is configured to indicate that the target communication link is changed, and may also indicate a type of change, which is either addition or deletion. After receiving the first radio frame, the AP MLD performs a corresponding remapping operation depending on the type of change. For example, corresponding to the above case one, the AP MLD may delete the TID of the target communication link. For the above case two, the AP MLD may create a TID-to-Link mapping for the newly added target communication link.

In the embodiment of the disclosure, the STA sends the first radio frame. The first radio frame includes the TID-to-Link mapping information element, and the target communication link includes a newly added and/or deleted communication link. For the newly added and/or deleted communication link, the STA requests the AP to perform a corresponding TID-to-Link mapping operation via the first radio frame, to realize the TID-to-Link mapping mechanism, thereby improving the spectrum utilization. The embodiments of the disclosure provide a way to realize the TID-to-Link mapping mechanism in the multi-link scenario.

In an optional embodiment, the TID-to-Link mapping information element includes a link change indicator field. The link change indicator field indicates adding a communication link and/or deleting a communication link. That is, it indicates the type of change of the target communication link. For example, the TID-to-Link mapping information element is shown in Table 1 below.

**Table 1:**

| Content | Element ID | Length | Element ID Extension | TID-To-Link Mapping Control | Link Mapping Of TID 0 (Optional) | ... | Link Mapping Of TID 7 (Optional) |
|---|---|---|---|---|---|---|---|
| | | | | | | ... | |
| Octets | 1 | 1 | 1 | 2 | 0 or 2 | ... | 0 or 2 |
| | | | | | | ... | |

During multi-link (re)establishment, the non-AP MLD can initiate TID-to-Link mapping negotiation in a (re)association request frame if the AP MLD has already indicated. For example, as shown in Table 2, the TID-To-Link Mapping Control field carries the link change indicator field.

**Table 2:**

| | | | | |
|---|---|---|---|---|
| Direction | Default Mapping | link change indicator (Added/Deleted Link) | Reserved | Link Mapping Presence Indicator |

The link change indicator field indicates that the link is changed. For example, when "Added/Deleted Link" is set to 1, it indicates that a new link is added or an existing link is deleted. When "Added/Deleted Link" is set to 0, the link remains the same. Optionally, the link change indicator field may also indicate the type of change. For example, when "Added/Deleted Link" is set to 1, it indicates that a new link is added, and when "Added/Deleted Link" is set to 0, it indicates that an existing link is deleted.

In Table 2, "Direction" includes: downlink or uplink (DL/UL), or DL&UL. For example, for DL/UL, a format of the TID-To-Link Mapping control field is shown in Table 3 below.

**Table 3:**

| | | | | |
|---|---|---|---|---|
| DL/UL | Default Mapping | link change indicator (Added/Deleted Link) | Reserved | Link Mapping Presence Indicator |

For DL&UL, a format of the TID-To-Link Mapping control field is shown in Table 4 below.

**Table 4:**

| | | | | |
|---|---|---|---|---|
| DL&UL | Default Mapping | link change indicator (Added/Deleted Link) | Reserved | Link Mapping Presence Indicator |

In an optional embodiment, before sending the first radio frame, the method includes:
determining the first radio frame.

For example, after receiving a message frame broadcasted by the AP MLD for adding/deleting secondary APs, the STA may determine (generate) the first radio frame and send the first radio frame under any link, to identify that the STA negotiates a new TID mapping link with the AP MLD.

In FIG. 3, the embodiment of the disclosure provides a communication method. Optionally, the method is performed by a STA (i.e., a non-AP MLD) that supports multiple links. The method includes the following steps.

At step 301, a second radio frame is received, in which the second radio frame indicates adding a communication link or deleting a communication link.

The second radio frame may be sent by the AP MLD. The AP MLD sends the second radio frame to the STA after deleting/adding its secondary AP. The second radio frame indicates adding a communication link or deleting a communication link.

At step 302, the first radio frame is determined based on the second radio frame. The first radio frame includes the TID-to-Link mapping information element, and the target communication link includes a newly added and/or deleted communication link.

after receiving the second radio frame broadcasted by the AP MLD, the STA may determine (generate) the first radio frame and send the first radio frame under any link, to identify that the STA negotiates a new TID mapping with the AP MLD, and the TID-to-Link mapping information element is carried in the first radio frame.

At step 303, the first radio frame is sent.

In the embodiment of the disclosure, after receiving the second radio frame, the STA determines and sends the first radio frame. The first radio frame includes the TID-to-Link mapping information element. The target communication link includes a newly added and/or deleted communication link. For the newly added and/or deleted communication link, the STA requests the AP to perform the corresponding TID-to-Link mapping operation via the first radio frame, to realize the TID-to-Link mapping mechanism, thereby improving the spectrum utilization.

In an optional embodiment, sending the first radio frame includes:
sending the first radio frame on a communication link with an AP.

When sending the first radio frame, the STA may send the first radio frame through one of the communication links with the AP MLD in a unicast form, in which the first radio frame identifies that the STA negotiates a new TID mapping link with the AP MLD.

In an optional embodiment, the first radio frame indicates to establish a TID-to-Link mapping of the STA. The STA instructs or requests the AP MLD to update or establish a new TID-to-Link mapping by sending the first radio frame, to realize the TID-to-Link mapping mechanism.

In an optional embodiment, the first radio frame includes a TID-to-Link request frame, and the TID-to-Link request frame includes the TID-to-Link mapping information element, as shown in the above Table 1.

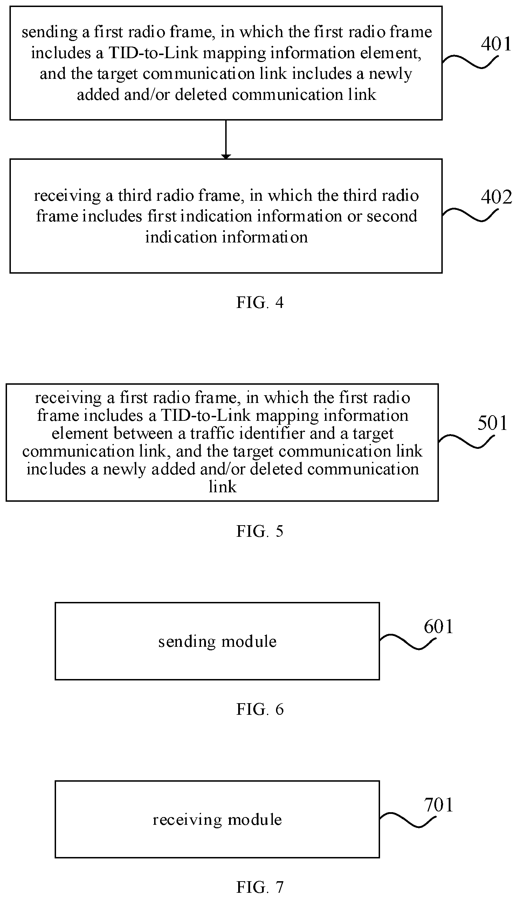

In FIG. 4, the embodiment of the disclosure provides a communication method. Optionally, the method is performed by a STA (i.e., a non-AP MLD) that supports multiple links. The method includes the following steps.

At step 401, a first radio frame is sent, in which the first radio frame includes a TID-to-Link mapping information element, and the target communication link includes a newly added and/or deleted communication link.

At step 402, a third radio frame is received, in which the third radio frame includes first indication information or second indication information.

The first indication information instructs the AP to establish a first TID-to-Link mapping in the TID-to-Link mapping information element. The second indication information instructs the STA to trigger establishment of a second TID-to-Link mapping. The first TID-to-Link mapping is different from the second TID-to-Link mapping.

The third radio frame may be, for example, a TID-to-Link mapping response frame. If the AP MLD accepts the request from the Non-AP MLD and establishes the requested first TID-to-Link mapping, the AP MLD carries the first indication information in the third radio frame. The first indication information may include a status code indicating that the request to establish the first TID-to-Link mapping is accepted. If the AP MLD does not accept the request from the Non-AP MLD, for example, the first TID-to-Link mapping being unable to be established, the AP MLD carries the second indication information in the third radio frame. In the second indication information, the AP MLD recommends the second TID-to-Link mapping to the STA and instructs the STA to trigger the establishment of the second TID-to-Link mapping.

In the embodiment of the disclosure, the STA sends the first radio frame, which includes the TID-to-Link mapping information element. The target communication link includes a newly added and/or deleted communication link. For the newly added and/or deleted communication link, the STA requests the AP to perform the corresponding TID-to-Link mapping operation via the first radio frame, and receives the third radio frame fed back from the AP. The third radio frame indicates that the STA may trigger the establishment of a TID-to-Link mapping, to realize the TID-to-Link mapping mechanism, thereby improving the spectrum utilization.

In an optional embodiment, the method further includes:
receiving a fourth radio frame, in which the fourth radio frame includes a target information element. The target information element indicates capability information of the AP at a physical (PHY) layer or at a medium access control (MAC) layer, and the capability information includes an indication of an ability of the AP to support changes in secondary APs. Therefore, the STA can be informed of the capability information of the AP MLD.

Optionally, the AP MLD may carry the capability information in an Enhancement for extremely high throughput (EHT) MAC capability information element, as shown in Table 5 below.

**Table 5:**

| Content | NSEP Priority Access Supported | EHT OM Control Support | Triggered TXOP Sharing Support | Reserved |
|---|---|---|---|---|
| Bits | 1 | 1 | 1 | 13 |
| order of Bits | B0 | B1 | B3 | B3 to B15 |

NSEP represents Existing National Security and Emergency Preparedness. For example, the "Reserved" field in Table 3 carries the capability information.

In addition, it is also possible to carry the capability information in an EHT PHY capability information element as shown in Table 6 below.

**Table 6:**

| Content | Reserved | Support For 320 MHz In 6 GHz | Support for 242-tone RU In BW Wider Than 20 MHz | NDP With 4× EHT-LTF And 3.2 µs GI) | Partial Bandwidth UL MU-MIMO | Signal user (SU) Beam former |
|---|---|---|---|---|---|---|
| Bits | 1 | 1 | 1 | 1 | 1 | 13 |
| Bits order of precedence | B0 | B1 | B2 | B3 | B4 | B5 |

For example, the capability information is carried in the "Reserved" field in the EHT PHY capability information element.

In the embodiment of the disclosure, after receiving the second radio frame, the STA determines and sends the first radio frame. The first radio frame includes the TID-to-Link mapping information element. The target communication link includes a newly added and/or deleted communication link. For the newly added and/or deleted communication link, the STA requests the AP to perform the corresponding TID-to-Link mapping operation via the first radio frame, to realize the TID-to-Link mapping mechanism, thereby improving the spectrum utilization.

In FIG. 5, the embodiment of the disclosure provides a communication method. Optionally, the method is performed by an AP (i.e., an AP or an AP MLD) that supports multiple links. The method includes the following steps.

At step 501, a first radio frame is received, in which the first radio frame includes a TID-to-Link mapping information element between a traffic identifier and a target communication link, and the target communication link includes a newly added and/or deleted communication link.

In the embodiment of the disclosure, the AP MLD and a non-AP MLD may be devices that support multiple links. For ease of description, the following context mainly describes an example of one AP communicating with one STA on multiple links. However, the exemplary embodiments of the disclosure are not limited thereto.

As a first example, in FIG. 2, the AP MLD may represent the AP that supports a multi-link communication function, and the non-AP MLD may represent a STA that supports a multi-link communication function. As illustrated in FIG. 2, the AP MLD may operate under three links. AP1, AP2, and AP3 shown in FIG. 2 each may operate under three links, i.e., Link 1, Link 2, and Link 3, respectively. The non-AP MLD, i.e., STA1, STA2, and STA3 shown in FIG. 2, may also operate under three links, in which STA1 works under Link 1, STA2 works under Link 2, and STA3 works under Link 3. In the example of FIG. 2, for example, AP1 communicates with STA1 through Link 1, and similarly, AP2 communicates with STA2 through Link 2, and the AP communicates with STA3 through Link 3. In addition, Link 1 to Link 3 may be links at different frequencies, e.g., links at 2.4GHz, 5GHz, and 6GHz, or links having the same or different bandwidths at 2.4GHz. In addition, each link may have a plurality of channels. It may be appreciated that the communication scenario shown in FIG. 2 is only exemplary, and the concept of the disclosure is not limited thereto. For example, the AP MLD may be connected to multiple non-AP MLDs, or the AP may communicate with other types of STAs under each link.

In a multi-link scenario, the AP MLD may delete/add its secondary AP. If a secondary AP is changed, the AP MLD receives the first radio frame sent by the STA, and the first radio frame is configured to request to update a TID-to-Link mapping. For example, for case one where the AP MLD deletes the link on which its secondary AP operates, the TID may still be mapped to the deleted link of the secondary AP, at this time, the STA may request the AP MLD to update the TID-to-Link mapping. For case two where the AP MLD adds a new secondary AP, a link of the newly added secondary AP does not have a TID mapping. In the above two cases, the STA requests the AP MLD to update the TID-to-Link mapping via the first radio frame, to realize the TID-to-Link mapping mechanism.

The target communication link includes a newly added and/or deleted communication link. The first radio frame includes the TID-to-Link mapping information element. The TID-to-Link mapping information element is configured to indicate that the target communication link is changed, and may also indicate a type of change, which is either addition or deletion. After receiving the first radio frame, the AP MLD performs a corresponding remapping operation depending on the type of change. For example, corresponding to the above case one, the AP MLD may delete the TID of the target communication link. For the above case two, the AP MLD may create a TID-to-Link mapping for the newly added target communication link.

In the embodiment of the disclosure, the AP MLD receives the first radio frame. The first radio frame includes the TID-to-Link mapping information element, and the target communication link includes a newly added and/or deleted communication link. For the newly added and/or deleted communication link, the AP MLD performs a corresponding TID-to-Link mapping operation according to the first radio frame, to realize the TID-to-Link mapping mechanism, thereby improving the spectrum utilization. The embodiments of the disclosure provide a way to realize the TID-to-Link mapping mechanism in the multi-link scenario.

In an optional embodiment, the TID-to-Link mapping information element includes a link change indicator field. The link change indicator field indicates adding a communication link and/or deleting a communication link.

That is, it indicates the type of change of the target communication link. For example, the TID-to-Link mapping information element is shown in Table 1 below.

**Table 1:**

| Content | Element ID | Length | Element ID Extension | TID-To-Link Mapping Control | Link Mapping Of TID 0 (Optional) | ... | Link Mapping Of TID 7 (Optional) |
|---|---|---|---|---|---|---|---|
| | | | | | | ... | |
| Octets | 1 | 1 | 1 | 2 | 0 or 2 | ... | 0 or 2 |
| | | | | | | ... | |

During multi-link (re)establishment, the non-AP MLD can initiate TID-to-Link mapping negotiation in a (re)association request frame if the AP MLD has already indicated. For example, as shown in Table 2, the TID-To-Link Mapping Control field carries the link change indicator field.

**Table 2:**

| | | | | |
|---|---|---|---|---|
| Direction | Default Mapping | link change indicator (Added/Deleted Link) | Reserved | Link Mapping Presence Indicator |

The link change indicator field indicates that the link is changed. For example, when "Added/Deleted Link" is set to 1, it indicates that a new link is added or an existing link is deleted. When "Added/Deleted Link" is set to 0, the link remains the same. Optionally, the link change indicator field may also indicate the type of change. For example, when "Added/Deleted Link" is set to 1, it indicates that a new link is added, and when "Added/Deleted Link" is set to 0, it indicates that an existing link is deleted.

In Table 2, "Direction" includes: DL/UL, or DL&UL. For example, for DL/UL, a format of the TID-To-Link Mapping control field is shown in Table 3 below.

**Table 3:**

| | | | | |
|---|---|---|---|---|
| DL/UL | Default Mapping | link change indicator (Added/Deleted Link) | Reserved | Link Mapping Presence Indicator |

For DL&UL, a format of the TID-To-Link Mapping control field is shown in Table 4 below.

**Table 4:**

| | | | | |
|---|---|---|---|---|
| DL&UL | Default Mapping | link change indicator (Added/Deleted Link) | Reserved | Link Mapping Presence Indicator |

In an optional embodiment, before receiving the first radio frame, the method includes:
sending a second radio frame, in which the second radio frame indicates adding a communication link or deleting a communication link.

After the AP MLD deletes/adds its secondary AP, it sends the second radio frame to the STA. The second radio frame indicates adding a communication link or deleting a communication link.

In an optional embodiment, receiving the first radio frame includes:
receiving the first radio frame on a communication link with a STA.

When the AP MLD receives the first radio frame, it may receive the first radio frame through one of the communication links with the STA in a unicast form, in which the first radio frame identifies that the STA negotiates a new TID mapping link with the AP MLD.

In an optional embodiment, after receiving the first radio frame, the method includes:
sending a third radio frame, in which the third radio frame includes first indication information or second indication information.

The first indication information indicates the AP to establish a first TID-to-Link mapping in the TID-to-Link mapping information element, the second indication information indicates the STA that sending the first radio frame to trigger establishment of a second TID-to-Link mapping. The first TID-to-Link mapping is different from the second TID-to-Link mapping.

If the AP MLD accepts the request from the Non-AP MLD and establishes the requested first TID-to-Link mapping, the AP MLD carries the first indication information in the third radio frame. The first indication information may include a status code indicating that the request to establish the first TID-to-Link mapping is accepted. If the AP MLD does not accept the request from the Non-AP MLD, for example, the first TID-to-Link mapping being unable to be established, the AP MLD carries the second indication information in the third radio frame. In the second indication information, the AP MLD recommends the second TID-to-Link mapping to the STA and instructs the STA to trigger the establishment of the second TID-to-Link mapping.

In an optional embodiment, the method further includes:
sending a fourth radio frame, in which the fourth radio frame includes a target information element. The target information element indicates capability information of the AP at a PHY layer or at a MAC layer, and the capability information includes an indication of an ability of the AP to support changes in secondary APs.

Optionally, the AP MLD may carry the capability information in an EHT MAC capability information element, as shown in Table 5 below.

**Table 5:**

| Content | NSEP Priority Access Supported | EHT OM Control Support | Triggered TXOP Sharing Support | Reserved |
|---|---|---|---|---|
| Bits | 1 | 1 | 1 | 13 |
| order of Bits | B0 | B1 | B3 | B3 to B15 |

NSEP represents Existing National Security and Emergency Preparedness. For example, the "Reserved" field in Table 3 carries the capability information.

In addition, it is also possible to carry the capability information in an EHT PHY capability information element as shown in Table 6 below.

**Table 6:**

| Content | Reserved | Support For 320 MHz In 6 GHz | Support for 242-tone RU In BW Wider Than 20 MHz | NDP With 4× EHT-LTF And 3.2 µs GI) | Partial Bandwidth UL MU-MIMO | Signal user (SU) Beam former |
|---|---|---|---|---|---|---|
| Bits | 1 | 1 | 1 | 1 | 1 | 13 |
| Bits order of precedence | B0 | B1 | B2 | B3 | B4 | B5 |

For example, the capability information is carried in the "Reserved" field in the EHT PHY capability information element.

In an optional embodiment, the first radio frame includes a TID-to-Link request frame. The TID-to-Link request frame includes a TID-to-Link mapping information element, as shown in the above Table 1.

In the embodiment of the disclosure, the AP MLD receives the first radio frame. The first radio frame includes the TID-to-Link mapping information element. The target communication link includes a newly added and/or deleted communication link. For the newly added and/or deleted communication link, the AP MLD performs the corresponding TID-to-Link mapping operation according to the first radio frame, to realize the TID-to-Link mapping mechanism, thereby improving the spectrum utilization.

Based on the same principle as the STA provided in the embodiments of the disclosure, the embodiments of the disclosure also provide a STA, which is a STA that supports multiple links. As shown in FIG. 6, the STA includes:
a sending module 601, configured to send a first radio frame, in which the first radio frame includes a TID-to-Link mapping information element between a traffic identifier and a target communication link, and the target communication link includes a newly added and/or deleted communication link.

In a multi-link scenario, an AP MLD may delete/add its secondary AP. If a secondary AP is changed, the STA sends the first radio frame, the first radio frame is configured to request to update a TID-to-Link mapping. For example, for case one where the AP MLD deletes a link on which its secondary AP operates, the TID may still be mapped to the deleted link of the secondary AP, at this time, the STA may request the AP MLD to update the TID-to-Link mapping. For case two where the AP MLD adds a new secondary AP, a link of the newly added secondary AP does not have a TID mapping. In the above two cases, the STA requests the AP MLD to update the TID-to-Link mapping via the first radio frame, to realize the TID-to-Link mapping mechanism.

The target communication link includes a newly added and/or deleted communication link. The first radio frame includes the TID-to-Link mapping information element. The TID-to-Link mapping information element is configured to indicate that the target communication link is changed, and may also indicate a type of change, which is either addition or deletion. After receiving the first radio frame, the AP MLD performs a corresponding remapping operation depending on the type of change. For example, corresponding to the above case one, the AP MLD may delete the TID of the target communication link. For the above case two, the AP MLD may create a TID-to-Link mapping for the newly added communication link.

In an optional embodiment, the TID-to-Link mapping information element includes a link change indicator field, and the link change indicator field indicates adding a communication link and/or deleting a communication link.

In an optional embodiment, the STA includes:
a radio frame determining module, configured to determine the first radio frame.

In an optional embodiment, determining the first radio frame includes:
receiving a second radio frame, in which the second radio frame indicates adding a communication link or deleting a communication link; and
determining the first radio frame based on the second radio frame.

In an optional embodiment, the sending module 601 is configured to:
send the first radio frame on a communication link with an AP.

In an optional embodiment, the first radio frame indicates establishing a TID-to-Link mapping of the STA.

In an optional embodiment, the STA includes:
a first receiving module, configured to receive a third radio frame, in which the third radio frame includes first indication information or second indication information.

The first indication information indicates an AP to establish a first TID-to-Link mapping in the TID-to-Link mapping information element, the second indication information indicates the station to trigger establishment of a second TID-to-Link mapping, and the first TID-to-Link mapping is different from the second TID-to-Link mapping.

In an optional embodiment, the STA includes:
a second receiving module, configured to receive a fourth radio frame, in which the fourth radio frame includes a target information element, the target information element indicates capability information of an AP at a PHY layer or at a MAC layer, and the capability information includes an indication of an ability of the AP to support a change in a secondary AP.

In an optional embodiment, the first radio frame includes a TID-to-Link request frame.

With the STA provided in the embodiment of the disclosure, the sending module 601 sends the first radio frame. The first radio frame includes the TID-to-Link mapping information element. The target communication link includes a newly added and/or deleted communication link. For the newly added and/or deleted communication link, the STA requests the AP to perform the corresponding TID-to-Link mapping operation through the first radio frame, to realize the TID-to-Link mapping mechanism, thereby improving the spectrum utilization.

Based on the same principle as the method provided in the embodiments of the disclosure, the embodiments of the disclosure also provide a communication device, which is applied to a STA that supports multiple links. The communication device includes:
a radio frame sending module, configured to send a first radio frame, in which the first radio frame includes a TID-to-Link mapping information element between a traffic identifier and a target communication link, and the target communication link includes a newly added and/or deleted communication link.

The device also includes other modules of the STA in the preceding embodiments for performing other functions implemented by the STA in the preceding embodiments, which will not be repeated herein.

Based on the same principle as the STA provided in the embodiments of the disclosure, the embodiments of the disclosure also provide an AP, which is an AP that supports multiple links. As shown in FIG. 7, the AP includes:
a receiving module 701, configured to receive a first radio frame, in which the first radio frame includes a TID-to-Link mapping information element between a traffic identifier and a target communication link, and the target communication link includes a newly added and/or deleted communication link.

In a multi-link scenario, an AP MLD may delete/add its secondary AP. If the secondary APs are changed, the AP MLD receives the first radio frame sent by a STA, the first radio frame is configured to request to update a TID-to-Link mapping. For example, for case one where the AP MLD deletes a link on which its secondary AP operates, the TID may still be mapped to the deleted link of the secondary AP, at this time, the STA may request the AP MLD to update the TID-to-Link mapping. For case two where the AP MLD adds a new secondary AP, a link of the newly added secondary AP does not have a TID mapping. In the above two cases, the STA requests the AP MLD to update the TID-to-Link mapping via the first radio frame, to realize the TID-to-Link mapping mechanism.

The target communication link includes a newly added and/or deleted communication link. The first radio frame includes the TID-to-Link mapping information element. The TID-to-Link mapping information element is configured to indicate that the target communication link is changed, and may also indicate a type of change, which is either addition or deletion. After receiving the first radio frame, the AP MLD performs a corresponding remapping operation depending on the type of change. For example, corresponding to the above case one, the AP MLD may delete the TID of the target communication link. For the above case two, the AP MLD may create a TID-to-Link mapping for the newly added target communication link.

In an optional embodiment, the TID-to-Link mapping information element includes a link change indicator field, and the link change indicator field indicates adding a communication link and/or deleting a communication link.

In an optional embodiment, before receiving the first radio frame, the AP is configured to:
send a second radio frame, in which the second radio frame indicates adding a communication link or deleting a communication link.

In an optional embodiment, the receiving module 701 is configured to:
receive the first radio frame on a communication link with a STA.

In an optional embodiment, the AP includes:
a first sending module, configured to send a third radio frame, in which the third radio frame includes first indication information or second indication information.

The first indication information indicates the AP to establish a first TID-to-Link mapping in the TID-to-Link mapping information element, the second indication information indicates the station to trigger establishment of a second TID-to-Link mapping, and the first TID-to-Link mapping is different from the second TID-to-Link mapping.

In an optional embodiment, the AP includes:
a second sending module, configured to send a fourth radio frame, in which the fourth radio frame includes a target information element, the target information element indicates capability information of the AP at a PHY layer or at a MAC layer, and the capability information includes an indication of an ability of the AP to support a change in a secondary AP.

In an optional embodiment, the first radio frame includes a TID-to-Link request frame.

In the embodiment of the disclosure, the receiving module 701 receives the first radio frame. The first radio frame includes the TID-to-Link mapping information element. The target communication link includes a newly added and/or deleted communication link. For the newly added and/or deleted communication link, the AP MLD performs a corresponding TID-to-Link mapping operation according to the first radio frame, to realize the TID-to-Link mapping mechanism, thereby improving the spectrum utilization.

Based on the same principle as the method provided in the embodiments of the disclosure, the embodiments of the disclosure also provide a communication device, which is applied to an AP that supports multiple links. The communication device includes:
a radio frame receiving module, configured to receive a first radio frame, in which the first radio frame includes a TID-to-Link mapping information element between a traffic identifier and a target communication link, and the target communication link includes a newly added and/or deleted communication link.

The device further includes other modules of the AP in the preceding embodiments for performing other functions performed by the AP in the preceding embodiments, which will not be repeated herein.

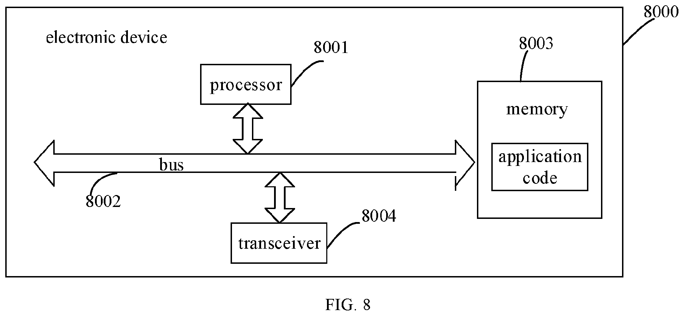

In an optional embodiment, the embodiment of the disclosure also provides an electronic device. As illustrated in FIG. 8, the electronic device 8000 shown in FIG. 8 may be a server, which includes: a processor 8001 and a memory 8003. The processor 8001 is connected to the memory 8003, for example, via a bus 8002. Optionally, the electronic device 8000 may also include a transceiver 8004. It should be noted that there may be one or more transceivers 8004 in practical applications, and the structure of the electronic device 8000 does not constitute a limitation of the embodiments of the disclosure.

The processor 8001 can be a Central Processing Unit (CPU), a general purpose processor, a Digital Signal Processor (DSP), an Application Specific Integrated Circuit (ASIC), a Field Programmable Gate Array (FPGA) or other programmable logic devices, transistor logic devices, hardware components, or any combination thereof. The processor 8001 may implement or execute various exemplary logic boxes, modules, and circuits described in combination with the description disclosed in the disclosure. The processor 8001 may also be a combination that implements a computing function, for example, a combination consisting of one or more microprocessors, and a combination consisting of DSPs and microprocessors.

The bus 8002 may include a pathway to transfer information among the above components. The bus 8002 may be a Peripheral Component Interconnect (PCI) bus or an Extended Industry Standard Architecture (EISA) bus. The bus 8002 can be categorized as an address bus, a data bus, a control bus, and the like. For ease of representation, the bus 8002 is represented by only one thick line in FIG. 8, but it does not indicate that there is only one bus or one type of bus.

The memory 8003 may be a Read Only Memory (ROM) or other types of static storage devices for storing static information and instructions, a Random Access Memory (RAM) or other types of dynamic storage devices for storing information and instructions, an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store expected program codes in the form of instructions or data structures and can be accessed by a computer, which is not limited herein.

The memory 8003 is configured to store application codes for executing the solution of the disclosure, and the execution is controlled by the processor 8001. The processor 8001 is configured to execute the application codes stored in the memory 8003 to implement the contents shown in the foregoing method embodiments.

The electronic device includes but is not limited to: a mobile phone, a notebook computer, a digital broadcast receiver, a personal digital assistant (PDA), a PAD, a portable multimedia player (PMP), a vehicle-mounted terminal (e.g., vehicle-mounted navigation terminal) and other mobile terminals, and fixed terminals such as a digital TV and a desktop computer. The electronic device shown in FIG. 8 is only an example and should not impose any limitation on the functions and scope of use of the embodiments of the disclosure.

The server provided by the disclosure may be a standalone physical server, a server cluster or a distributed system comprising multiple physical servers, or a cloud server providing basic cloud computing services such as cloud services, cloud database, cloud computing, cloud functions, cloud storage, network services, cloud communication, middleware services, domain name services, security services, Content Distribution Network (CDN), and big data and artificial intelligence platforms. The terminal may include, but is not limited to, a smartphone, a tablet, a laptop, a desktop computer, a smart speaker, and a smart watch. The terminal and the server may be connected directly or indirectly in a wired or wireless manner, which is not limited herein.

The embodiments of the disclosure provide a computer-readable storage medium having computer programs stored thereon. When the computer programs are executed by a computer, the computer is caused to execute the corresponding contents of the foregoing method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowchart of the accompanying drawings may include multiple sub-steps or multiple stages. These sub-steps or stages are not necessarily executed at the same time, but may be executed at different times, and the order of the execution is not necessarily sequential, but may be executed in turn or alternately with other steps or at least a portion of sub-steps or stages of other steps.

It is noted that the computer-readable medium described above in the disclosure may be a computer-readable signaling medium, a computer-readable storage medium or any combination thereof. The computer-readable storage medium may include, but is not limited to, an electrical, magnetic, optical, electromagnetic, infrared, or semiconducting system, apparatus or device, or any combination thereof. More specific examples of the computer-readable storage medium may include, but are not limited to, electrical connections having one or more wires, portable computer disks, hard disks, RAMs, ROMs, Erasable Programmable Read Only Memories (EPROMs or flash memories), optical fibers, portable CD-ROMs, optical storage devices, magnetic memory devices, or any suitable combination thereof. In the disclosure, the computer-readable storage medium may be any tangible medium containing or storing programs that may be used by or in combination with an instruction execution system, apparatus or device. In the disclosure, a computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program that can be used by or in combination with an instruction execution system, apparatus, or device. The program code stored on the computer-readable medium may be transmitted using any suitable medium, which includes, but is not limited to: wire, fiber optic cable, Radio Frequency (RF), or any suitable combination thereof.

The above computer-readable medium may be contained in the above electronic device or exist independently rather than being assembled into the electronic device.

The computer-readable medium carries one or more programs. When the one or more programs are executed by the electronic device, the electronic device is caused to implement the method shown in the above embodiments.

According to an aspect of the disclosure, a computer program product or computer program is provided. The computer program product or computer program includes computer instructions stored in a computer-readable storage medium. The processor of the computer device reads the computer instructions from the computer-readable storage medium, and the processor executes the computer instructions to cause the computer device to implement the communication method provided in the above optional implementations.

The computer program codes for performing the operations of the disclosure may be written in one or more programming languages or combinations thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a LAN or a Wide Area Network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the disclosure may be realized through software or hardware. The name of a module does not constitute a limitation of the module itself in a certain case. For example, module A may also be described as "module A for performing an operation B".

The above description is only preferred embodiments of the disclosure and an explanation of the technical principles utilized. It should be understood by those skilled in the art that the scope of disclosure involved in the disclosure is not limited to the technical solutions formed by a particular combination of the above technical features, but also covers other technical solutions formed by any combination of the above technical features or their equivalent features without departing from the above disclosed concept, for example, the technical solution formed by interchanging the above features with technical features with similar functions disclosed (but not limited to) in the disclosure.

## Claims

1. A communication method, performed by a station that supports multiple links, comprising:
sending a first radio frame, wherein the first radio frame comprises a Traffic Identifier-to-communication Link (TID-to-Link) mapping information element between a traffic identifier and a target communication link, and the target communication link comprises a newly added and/or deleted communication link.

2. The method of claim 1, wherein the TID-to-Link mapping information element comprises a link change indicator field, and the link change indicator field indicates adding a communication link and/or deleting a communication link.

3. The method of claim 1, before sending the first radio frame, further comprising:
determining the first radio frame.

4. The method of claim 3, wherein determining the first radio frame comprises:
receiving a second radio frame, wherein the second radio frame indicates adding a communication link or deleting a communication link; and
determining the first radio frame based on the second radio frame.

5. The method of claim 1, wherein sending the first radio frame comprises:
sending the first radio frame on a communication link with an access point (AP).

6. The method of claim 1, wherein the first radio frame indicates establishing a TID-to-Link mapping of the station.

7. The method of claim 1, after sending the first radio frame, further comprising:
receiving a third radio frame, wherein the third radio frame comprises first indication information or second indication information; wherein
the first indication information indicates an AP to establish a first TID-to-Link mapping in the TID-to-Link mapping information element, the second indication information indicates the station to trigger establishment of a second TID-to-Link mapping, wherein the first TID-to-Link mapping is different from the second TID-to-Link mapping.

8. The method of claim 1, further comprising:
receiving a fourth radio frame, wherein the fourth radio frame comprises a target information element, the target information element indicates capability information of an AP at a physical (PHY) layer or at a medium access control (MAC) layer, and the capability information comprises an indication of an ability of the AP to support a change in a secondary AP.

9. The method of any one of claims 1-8, wherein the first radio frame comprises a TID-to-Link request frame.

10. A communication method, performed by an access point (AP) that supports multiple links, comprising:
receiving a first radio frame, wherein the first radio frame comprises a Traffic Identifier-to-communication Link (TID-to-Link) mapping information element between a traffic identifier and a target communication link, and the target communication link comprises a newly added and/or deleted communication link.

11. The method of claim 10, wherein the TID-to-Link mapping information element comprises a link change indicator field, and the link change indicator field indicates adding a communication link and/or deleting a communication link.

12. The method of claim 10, before receiving the first radio frame, further comprising:
sending a second radio frame, wherein the second radio frame indicates adding a communication link or deleting a communication link.

13. The method of claim 10, wherein receiving the first radio frame comprises:
receiving the first radio frame on a communication link with a station.

14. The method of claim 10, after receiving the first radio frame, further comprising:
sending a third radio frame, wherein the third radio frame comprises first indication information or second indication information; wherein
the first indication information indicates the AP to establish a first TID-to-Link mapping in the TID-to-Link mapping information element, the second indication information indicates the station to trigger establishment of a second TID-to-Link mapping, and the first TID-to-Link mapping is different from the second TID-to-Link mapping.

15. The method of claim 10, further comprising:
sending a fourth radio frame, wherein the fourth radio frame comprises a target information element, the target information element indicates capability information of the AP at a physical (PHY) layer or at a medium access control (MAC) layer, and the capability information comprises an indication of an ability of the AP to support a change in a secondary AP.

16. The method of any one of claims 10-15, wherein the first radio frame comprises a TID-to-Link request frame.

17. A station, wherein the station supports multiple links, the station comprising:
a sending module, configured to send a first radio frame, wherein the first radio frame comprises a Traffic Identifier-to-communication Link (TID-to-Link) mapping information element between a traffic identifier and a target communication link, and the target communication link comprises a newly added and/or deleted communication link.

18. An access point (AP), wherein the AP supports multiple links, the AP comprising:
a receiving module, configured to receive a first radio frame, wherein the first radio frame comprises a Traffic Identifier-to-communication Link (TID-to-Link) mapping information element between a traffic identifier and a target communication link, and the target communication link comprises a newly added and/or deleted communication link.

19. A communication device, applied to a station that supports multiple links, comprising:
a radio frame sending module, configured to send a first radio frame, wherein the first radio frame comprises a Traffic Identifier-to-communication Link (TID-to-Link) mapping information element between a traffic identifier and a target communication link, and the target communication link comprises a newly added and/or deleted communication link.

20. A communication device, applied to an access point (AP) that supports multiple links, comprising:
a radio frame receiving module, configured to receive a first radio frame, wherein the first radio frame comprises a Traffic Identifier-to-communication Link (TID-to-Link) mapping information element between a traffic identifier and a target communication link, and the target communication link comprises a newly added and/or deleted communication link.

21. An electronic device, comprising a memory, a processor and computer programs stored on the memory and executable by the processor, wherein when the programs are executed by the processor, the method of any one of claims 1-16 is implemented.

22. A computer-readable storage medium having computer programs stored thereon, wherein when the computer programs are executed by a processor, the method of any one of claims 1-16 is implemented.
